Europäisches Patentamt

(19) European Patent Office

Office européen des brevets

(11) Publication number: **0 013 136**
**B1**

(12) **EUROPEAN PATENT SPECIFICATION**

(45) Date of publication of patent specification: **01.12.82**

(51) Int. Cl.³: **B 62 M 9/12**

(21) Application number: **79302976.0**

(22) Date of filing: **20.12.79**

(54) Gear changing device for a cycle.

(30) Priority: **30.12.78 JP 166091/78**
**30.12.78 JP 183721/78 U**
**05.02.79 JP 14342/79 U**
**05.02.79 JP 14343/79 U**

(43) Date of publication of application:
**09.07.80 Bulletin 80/14**

(45) Publication of the grant of the patent:
**01.12.82 Bulletin 82/48**

(84) Designated Contracting States:
**BE DE FR GB IT**

(56) References cited:
**FR - A - 2 327 919**
**FR - A - 2 345 341**
**GB - A - 982 986**

(73) Proprietor: **SHIMANO INDUSTRIAL COMPANY LIMITED**
**77, 3-cho Oimatsu-cho Sakai-shi**
**Osaka (JP)**

(72) Inventor: **Nagano, Masashi**
**1975-11, Kanaika-cho**
**Sakai-shi Osaka (JP)**

(74) Representative: **Szczuka, Jan Tymoteusz et al,**
**Cruikshank & Fairweather 19 Royal Exchange Square**
**Glasgow G1 3AE Scotland (GB)**

Courier Press, Leamington Spa, England.

Gear changing device for a cycle

This invention relates to a gear-changing device for a cycle, which device comprises: a rear derailleur controllable in use of the device by a control wire, said derailleur comprising a bracket for connection to a fork end of the cycle and a pantograph mechanism pivotally connected to said bracket by a first horizontal spindle, said pantograph mechanism comprising a support member pivotally connected to said bracket by said first horizontal spindle, two linkage members pivotally connected to said support member by spindles substantially perpendicular to said first horizontal spindle, and a movable member pivotally connected to said two linkage members through corresponding spindles also substantially perpendicular to said first horizontal spindle, said movable member being pivotally connected by a second horizontal spindle substantially parallel to said first horizontal spindle to a chain cage; and a control wire holder provided on one of said two linkage members and the movable member of said pantograph mechanism for securing one end of said control wire.

Generally, the rear derailleur comprises a pantograph mechanism made up of a support member for mounting on a bracket, two linkage members, and a movable member, these four members being pivotally connected through four perpendicular spindles. A chain cage having two pulleys is pivotally supported on the movable member through one horizontal spindle.

Such a device is known from British Patent GB—A—982 986 in which a control wire holder is provided on one of the linkage members and a sheath holder on the support member, of the pantograph mechanism, for securing the wire and sheath of a control cable in the form of a Bowden cable, said sheath holder serving incidentally as a guide for the control wire.

The outer sheath guides the wire, said inner wire being fixed at one end to one member, for example, one of the linkage members, of the four members of the pantograph mechanism; the outer sheath being fixed at its corresponding end to another member of the pantograph mechanism which is movable relative to the member to which the wire is fixed, for example, the supporting member. The wire is operated to transform the pantograph mechanism and shift the movable member axially relative to the multi-speed sprockets on a cycle hub thereby to switch a drive chain to a desired one of the sprockets.

In the above type of construction, the control wire, which is guided by the outer sheath, connects the derailleur mechanism and a control lever therefor along a desired route without being under tension. However, the outer sheath, when in use, can project substantially laterally of the cycle wheel and give rise to a risk of catching the cyclist's foot or to other similar hazards. Also, the outer sheath gives rise to a relatively poor transfer efficiency of the displacement force from the control lever to the derailleur. Furthermore the outer sheath tends to expand or contract in length to a greater extent than the control wire so that the effective length of the control cable tends to vary which can result in incorrect gear-changing.

Also, the two relatively removable members of the pantograph mechanism hold the control wire and outer sheath so that the wire is operated to transform the pantograph mechanism and move the movable member (relative to the support member) axially of the multi-speed sprockets only. Indeed with a sheath holder on the support member as in GB—A—982 986 it is simply not possible to obtain a bodily pivotal movement of the pantograph mechanism about a spindle connecting it to the supporting bracket member at all by pulling of the control wire alone due to the function of the sheath holder in holding the outer sheath of the control wire — irrespective of the disposition of the sheath holder relative to, in particular outside, an imaginary straight line connecting the wire holder and the spindle, and any incidental wire guiding function of the sheath holder. Consequently, when the control wire is pulled to change gear, the pulleys of the chain cage carried by the movable member shift only axially of the sprocket assembly, thereby making the mechanism relatively heavy to control. Furthermore, when the chain is stationary, i.e. when no pedalling is taking place, the derailleur is subject to a much greater resistance to its operation so that gear-changing becomes impossible.

The latter problem can be solved by the use of an energy storing mechanism provided on the pantograph mechanism, the energy storing mechanism comprising an energy storing plate separate from the aforesaid four above-mentioned members and an energy storing spring acting on said plate, the plate holding the inner wire or outer sheath of the control cable, so that when a resistance against the gear speed-changing above a predetermined resistance is encountered, the wire moves only the energy storing plate against the spring, so that when the resistance is subsequently removed, the chain is automatically switched into the desired gear. However, the use of such an energy conserving mechanism may result in additional manufacturing costs and an increase in total weight.

It is an object of the present invention to minimize one or more of these problems.

The present invention provides a gear-changing device for a cycle, which device comprises a rear derailleur controllable in use of the device by a control wire, said derailleur comprising a bracket for connection to a fork end of the cycle and a pantograph mechanism pivotally connected to said bracket by a first horizontal spindle, said pantograph mechanism comprising a support member pivotally connected to said bracket by said first horizontal spindle, two linkage members pivotally connected to said support member by spindles perpendicular to said first horizontal spindle, and a movable member pivotally connected to said two linkage members through corresponding spindles also substantially perpendicular to said first horizontal spindle, said movable member being pivotally connected by a second horizontal spindle substantially parallel to said first horizontal spindle to a chain cage; and a control wire holder provided on one of said two linkage members or the movable member of said pantograph mechanism for securing one end of said control wire, at least one control wire guide being provided for guiding said control wire, said control wire guide being disposed, in use of the device, in a position spaced from the axis of the sprocket assembly and outwardly beyond an imaginary straight line connecting the control wire engaging portion of said wire holder and the first horizontal spindle, said control wire guide being so formed and arranged that the forces applied to the pantograph mechanism through the guide by the control wire are such as to exert a torque on the pantograph mechanism which tends to swing said pantograph mechanism about the horizontal spindle whereby when, in use of the device, said control wire is operated in the absence of a predetermined resistance against axial movement of the chain cage, to transform said pantograph mechanism with displacement of the chain cage axially relative to said sprocket assembly said pantograph mechanism swings around said first horizontal spindle to displace said chain cage generally radially of said sprocket assembly.

With a device of the invention the derailleur is controlled by use of a control wire alone without an outer sheath thereby avoiding the disadvantages associated with the use of the outer sheath and improving gear change efficiency. The control wire is also operable even when a resistance in excess of a predetermined resistance against gear-changing occurs, and, when the resistance is subsequently reduced, the chain is automatically switched to a desired gear defined by the previous operation of the control wire. Furthermore, there is no fear that a cyclist may catch his foot on part of the conventional outer sheath projecting laterally from the cycle wheel.

The gear-changing device of the invention is provided with a control wire guide so positioned relative to the derailleur that the control wire (without any outer sheath) is guided through the control wire guide so that it can control the pantograph mechanism transformation in the manner required for gear changing, in particular so that the pulleys in the chain cage mounted on the movable member, are simultaneously moved both axially and generally radially relative to the sprocket assembly. By this means the drive chain is guided by the pulley to be smoothly switched to a desired sprocket from an oblique direction resulting in light gear changing. Also, when the chain is stationary in the absence of pedalling and a resistance greater than a predetermined resistance against axial movement of the chain is encountered, the control wire still operates to swing the pantograph mechanism about the horizontal spindle connecting it to the bracket so that energy from the control wire is stored and when, subsequently the resistance is removed, the chain is switched to a sprocket corresponding to the desired gear. As a result, a separate extra energy storing device such as a conventional energy conserving spring or plate, is not necessary, thereby resulting in a relatively inexpensive solution which at the same time provides the aforesaid advantages.

With the gear-changing device of the invention the avoidance of the use of the outer sheath is also associated with a significant improvement in the transfer efficiency of the force applied to the control lever from said lever to the derailleur. In addition the possibility of expansion or contraction in the length of the sheath relative to the length of the control wire which results in poor gear changing is also avoided.

In alternative preferred forms of the invention, the control wire guide may be mounted on the support member or bracket of the derailleur, the fork end of the cycle at which the bracket is mounted, or on the hub shaft held in said fork end and on which the sprocket assembly is mounted.

Further preferred features of the invention will appear from the following description given by way of example of a number of embodiments of the invention illustrated with reference to the accompanying drawings in which:—

Figure 1 is a front elevation of a first embodiment of a gear-changing device of the invention;

Gigure 2 is a bottom view thereof;

Figure 3 is a perspective view of the principal portion of the speed-changing device in Figure 1;

Figures 4 and 5 are front elevations of second and third embodiments of the invention;

Figure 6 is a bottom view of the third embodiment of Figure 5;

Figure 7 is a front elevation of a fork end only, suitable for use with the embodiment of Figure 5;

Figure 8 and 9 are front elevations corresponding to Figure 7 of alternative fork ends suitable for use in gear changing devices of the invention;

Figure 10 is a front elevation of a fourth embodiment of a gear-changing device of the invention;

**0013136**

Figure 11 is a front elevation of a wire guide only, for use in the fourth embodiment of Figure 10;

Figure 12 is a sectional view taken on the line XII—XII in Figure 11; and

Figure 13 is a partially sectioned side elevation of the fourth embodiment of Figure 10 viewed from the right side, showing the wire guide mounting means.

A support member 2 is pivotally mounted on a lower portion of the bracket 1 by means of a first horizontal spindle 3. The support member 2 comprises a main body portion 2a formed of a metallic plate cranked into a generally U-shaped configuration and two supports 2b and 2c extending from the main body 2a, and is supported on the bracket 1 so as to be swingable through a given angle on said horizontal spindle 3 which extends through the centre of the body portion 2a.

Linkage members 5 and 6 are pivotally connected at one end to respective ones of the supports 2b and 2c by means of spindles 7 and 8 whose axes extend perpendicularly relative to the horizontal spindle 3. A movable member 9 is pivotally connected to the other ends of the linkage members 5 and 6 by means of two spindles 10 and 11 whose axes extend parallel to those of the spindles 7 and 8. The movable member 9 comprises a generally plate-like body 9a and two supports 9b and 9c. The supports 9b and 9c sandwich therebetween said other ends of the linkage members 5 and 6 and pivotally support them on the spindles 10, 11 which extend therethrough. The movable member body 9a carries a chain cage 14 pivotally mounted thereon by means of a second horizontal spindle 15 parallel to the horizontal spindle 3, the chain cage 14 having a guide pulley 12 anbd a tension pulley 13.

The support member 2, two linkage members 5 and 6, and the movable member 9, together form a pantograph-type mechanism, and the pantograph mechanism and bracket 1 and the various components thereof together constitute a derailleur gear-change device.

In use of the derailleur, the pulleys 12 and 13 together with the movable member 9 move axially relative to the multi-speed sprocket assembly S mounted on the hub spindle HS for shifting the chain from one sprocket to another and also move generally radially of the sprockets S about the first horizontal spindle 3 to accommodate the varying sizes of the multi-speed sprocket assembly S.

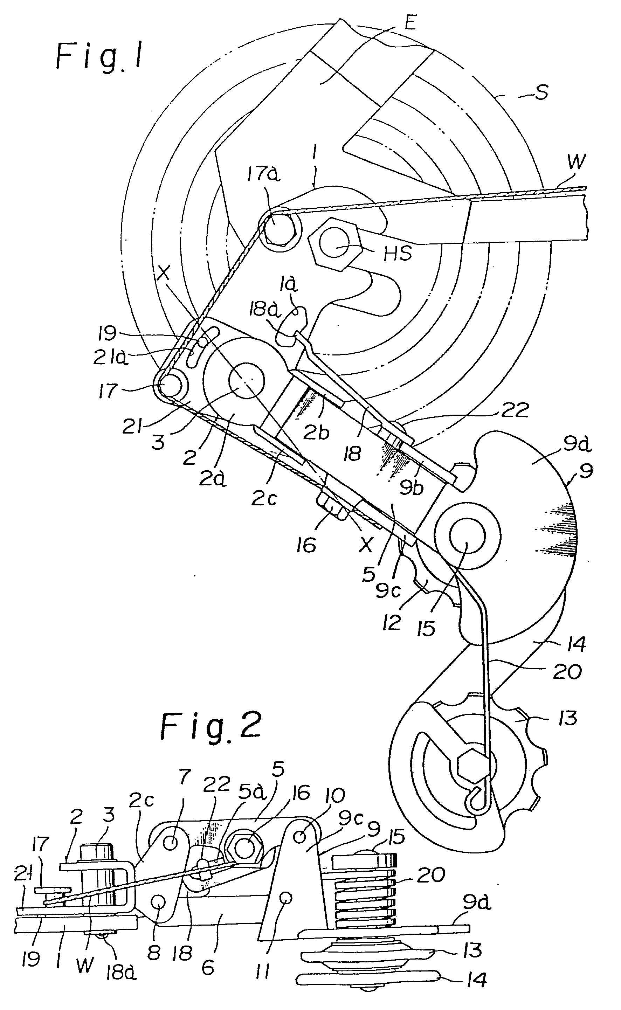

According to the present invention the derailleur is provided with a wire holder 16 on one of the two linkage members 5, 6 or the movable member 9 of said pantograph mechanism for securing one end of a control wire W. A wire guide 17 provided for guiding the control wire W is disposed radially outwardly of the common axis of the sprockets of the sprocket assembly S and beyond an imaginary straight line X—X (shown in the dot-and-dash line in Figure 1) extending through the engagement portion of the wire holder 16 and the first horizontal spindle 3. By this means the wire, guided by said control wire guide 17 and secured to the control wire holder 16 at the control engagement portion thereof may be operated to transform the pantograph mechanism so as to shift the pulleys 12 and 13 of the chain cage 14 axially of the sprocket assembly S, and simultaneously to swing the pantograph mechanism about the first horizontal spindle 3 thereby shifting the pulleys 12 and 13 radially of the sprocket assembly S also.

In brief, pulling of the wire W to transform and simultaneously swing the pantograph mechanism forces the pulleys 12 and 13 to shift axially of the sprocket assembly S and also generally radially thereof about the spindle 3.

Referring to Figures 1 and 2, the wire holder 16 is provided on one linkage member 5, a first wire guide 17 is provided on an extension 21 of the supporting member 2, and a second wire guide 17a on the mounting bracket 1.

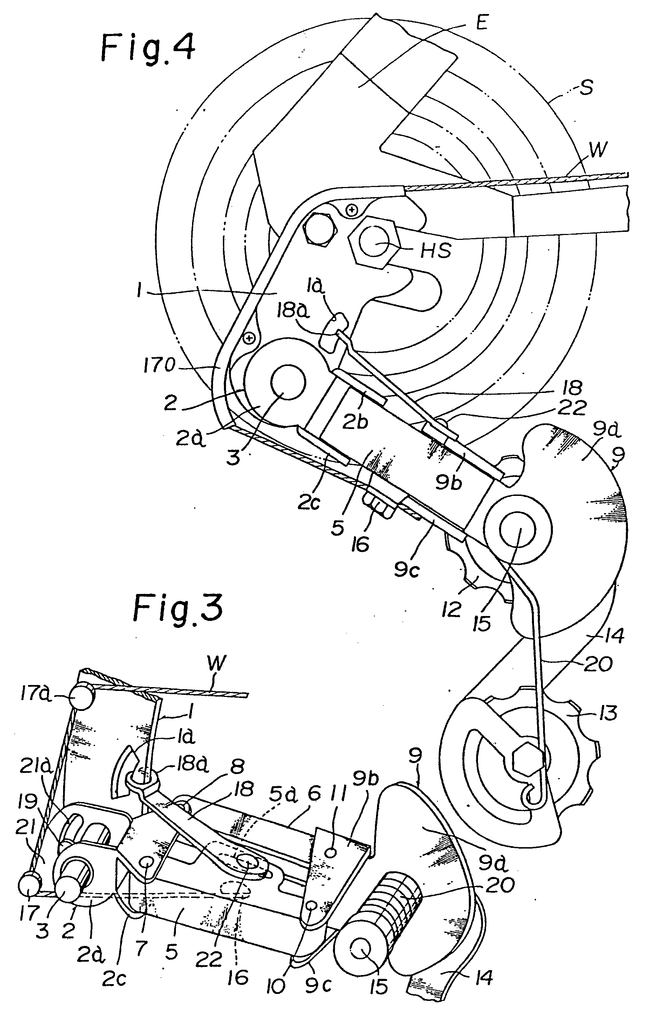

The derailleur shown in Figures 1 and 2 is not, however, provided with a return spring. A brace 18 is mounted on said one linkage member 5 by means of a slot 5a in the linkage member 5 and a pin 22 movable in said slot 5a as shown in Figures 1 and 3. A hook 18a is formed at the distal end of the brace 18 and engages slidably in an aperture 1a in the bracket 1. An energy storage means in the form of a resilient biasing means comprising a tension spring 20 is wound around the second horizontal spindle 15 (which supports the chain cage 14) and is disposed to act between the movable member 9 and the chain cage 14 with one end against said movable member 9 and its other end against the chain cage 14. The tension spring 20 is arranged to bias the pantograph mechanism in use of the device to swing about the horizontal spindle 3 towards the axis of sprocket assembly S and so that the movable member 9 tends to move towards the distal end of the bracket 1.

An arcuate slot 21a is formed in the supporting member extension 21 and a pin 19 is provided on the bracket 1, the pin 19 being slidably locatable in the slot 21a so that the supporting member 2 can swing relative to the bracket 1 through a restricted angular range defined by the length of said arcuate slot 21a.

In the above described construction, the control wire W is fixed at one end thereof to the wire holder 16, extends through the wire guides 17 and 17a, and then is fixed at its other end to a control lever (not shown) attached to a handle bar or to the frame in the vicinity thereof, on the cycle. Thus, the wire W extends, in tension, between the control lever and the wire holder 16, and a conventional outer sheath is not used.

When the control lever is operated to pull the wire W, the distance between the wire holder 16 and the first wire guide 17 is reduced and the pantograph mechanism transformed with the movable member 9 and chain cage 14 with pulleys 12 and 13 being displaced axially of the sprocket assembly. At this stage, the distance between the first wire guide 17 and the second wire guide 17a is also reduced as the supporting member 2 swings clockwise relative to the bracket 1 around the first horizontal spindle 3. As a result the pantograph mechanism including the supporting member 2 swings around the first horizontal spindle 3 thereby to shift the chain cage 14 and pulleys 12 and 13 at the same time radially outwardly of the sprocket assembly S.

In the above described gear-changing operation, the pulleys 12 and 13 move radially as well as axially relative to the sprocket assembly S. Accordingly the pulleys actually move along a path which is the resultant of these axial and radial movements and is generally oblique relative to the sprocket assembly S. The chain guided by the pulleys 12 and 13 is thus switched smoothly and with ease to a desired one of the sprockets of said sprocket assembly S, a relatively small force being sufficient to pull the control wire W.

When the chain is stationary in the absence of pedalling, there is of course a greater resistance to axial movement of the pulleys 12 and 13. Hence, when the control wire W is pulled, the movable member 9 is restrained from moving axially of the sprocket assembly S but is able nevertheless to swing around the first horizontal spindle 3 on the support member 2, so that the pantograph mechanism swings clockwise around the horizontal spindle 3. As a result, the spring 20 resiliently deforms to store the energy transmitted via the control wire W, and the stored energy, when the resistance is subsequently removed causes the pantograph mechanism to be transformed to an extent dependent on the amount of energy stored.

In the above described construction, a conventional return spring is mounted on the pantograph mechanism. Instead of the brace 18 there may be a spring disposed between the supporting member 2 and the bracket 1. This spring biases the pantograph mechanism towards the bracket 1 in a direction such that the pulleys 12 and 13 tend to approach the axis of the sprocket assembly S.

The embodiment shown in Figures 1 to 3 has two wire guides 17, 17a mounted on the support member 2 and bracket 1 as described. As an alternative though, both the first and second wire guides 17 and 17a could be provided on the bracket 1. Furthermore one wire guide 170 could be used instead of two as above and be mounted on the bracket 1 as shown in Figure 4.

The wire guide 170 comprises a main body with an extension, the main body being arranged outwardly of the axis of the sprocket assembly S and beyond the aforesaid imaginary line X—X, the extension extending from the main body at a point in proximity to the fixing portion of the bracket 1 to the fork end E.

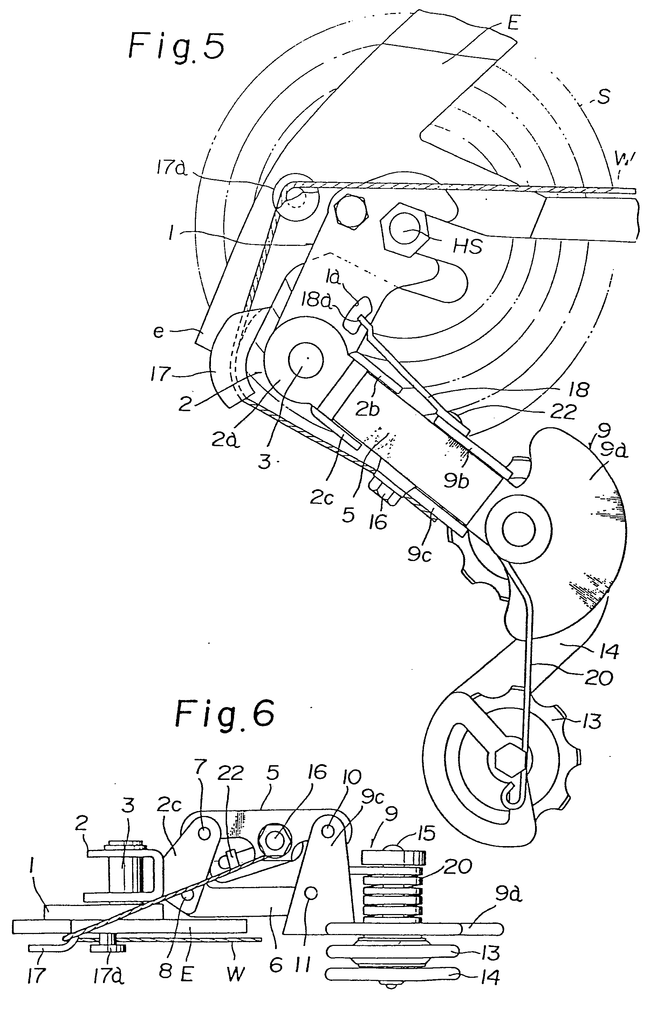

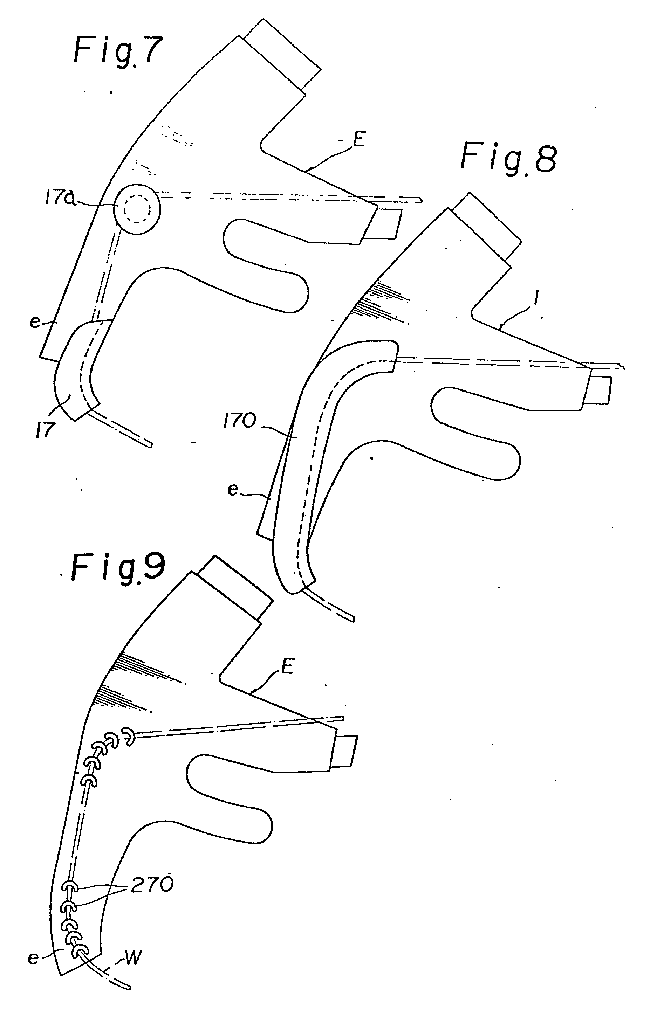

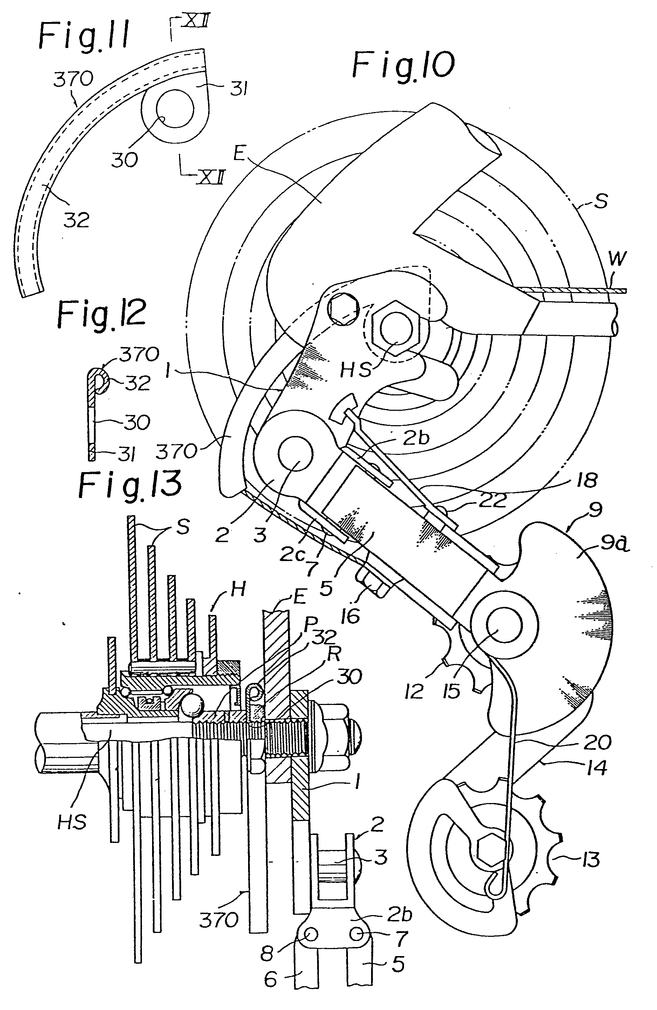

Alternatively, the wire guides 17 and 17a or 170 may be mounted on the fork end E as shown in Figure 5, or even on the hub shaft HS as shown in Figure 10. In the former case, wire guides are provided on an extension e of the fork end E. The two wire guides 17 and 17a shown in Figures 1 to 3 may be replaced by guides such as those of the embodiment shown in Figures 5 and 7. Or, the single wire guide 170 shown in Figure 4 could be mounted on the fork end E as shown in Figure 8.

Also, a plurality of individual wire guides 270 could be provided on the fork end E in more or less closed spaced relation along the guiding path of any desired configuration for the control wire W.

The wire guide 370 mounted on the hub shaft HS as shown in Figure 10, comprises a mounting portion 31 having a screw-threaded bore 30 mountable on the hub shaft HS and having a wire guide portion 32 (see Figures 11 and 12) so that the bore 30 may be screw-threadedly engaged with the hub shaft HS and secured in position by a lock nut R which also secured a bearing member P on the hub H of the cycle as further illustrated in Figure 13.

As used herein the expression pantograph mechanism refers to part of the derailleur device sometimes referred to as a parallelogram linkage.

## Claims

1. A gear-changing device for a cycle, which device comprises a rear derailleur controllable in use of the device by a control wire (W), said derailleur comprising a bracket (1) for connection to a fork end (E) of the cycle and a pantograph mechanism pivotally connected to said bracket (1) by a first horizontal spindle (3), said pantograph mechanism comprising a support member (2) pivotally connected to said bracket (1) by said first horizontal spindle (3), two linkage members (5, 6) pivotally connected to said support member (2) by spindles (7, 8) perpendicular to said first horizontal spindle (3), and a movable member (9) pivotally connected to said two linkage members (5, 6) through corresponding spindles (10, 11) also substantially perpendicular to said first horizontal spindle (3), said movable member (9) being pivotally connected by a second horizontal spindle (15) substantially parallel to said first horizontal spindle to a chain cage (14); and a control wire holder (16) provided on one of said two linkage members (5, 6) or the movable member (9) of said pantograph mechanism for securing one end of said control wire (W), at least one control wire guide (17) being provided for guiding said control wire (W), said control wire guide (17) being disposed, in use of the device, in a position spaced from the axis of the sprocket assembly (S) and outwardly beyond an imaginary straight line (X—X) connecting the control wire engaging portion of said wire holder (16) and the first horizontal spindle (3), said control wire guide (17) being so formed and arranged that the forces applied to the pantograph mechanism through the guide (17) by the control wire (W) are such as to exert a torque on the pantograph mechanism which tends to swing said pantograph mechanism about the horizontal spindle (3) whereby when, in use of the device, said control wire (W) is operated in the absence of a predetermined resistance against axial movement of the chain cage (14), to transform said pantograph mechanism with displacement of the chain cage (14) axially relative to said sprocket assembly (S), said pantograph mechanism swings around said first horizontal spindle (3) to displace said chain cage (14) generally radially of said sprocket assembly (S).

2. A gear-changing device according to Claim 1 wherein said control wire guide (17, 17a, 170) is provided on said derailleur.

3. A gear-changing device according to Claim 2, wherein a said control wire guide (17) is provided on said support member (2).

4. A gear-changing device according to Claim 2 or Claim 3, wherein a said control wire guide (17a 170) is provided on the bracket (1).

5. A gear-changing device according to any one of Claims 2 to 4, wherein a pair of first and second control wire guides (17, 17a) are provided, the first control wire guide (17) being disposed outwardly beyond the imaginary straight line (X—X) connecting the engagement portion of said control wire holder (16) and the first horizontal spindle (3), the second control wire guide (17a) being disposed in the vicinity of the fixing portion of said bracket (1) provided for fixing thereof to the fork end (E) of the cycle.

6. A gear-changing device according to Claim 5, wherein said first control wire guide (17) is provided on said support member (2) and said second control wire guide (17a) is provided on said bracket (1).

7. A gear-changing device according to Claim 2, wherein said control wire guide has an extension portion extending into proximity with the fixing portion of said bracket (1).

8. A gear-changing device according to Claim 1, wherein said control wire guide (17, 17a, 170 and 270) is provided on the fork end (E) of the cycle, to which fork end (E) said bracket (1) is secured.

9. A gear-changing device according to Claim 1, wherein said control wire guide (370) is mounted on the hub shaft (HS) on which the sprocket assembly (S) is.

10. A gear-changing device according to Claim 9, wherein said control wire guide (370) comprises a mounting portion (30) having a through bore (31) and mountable on said hub shaft (HS), and a guide portion (32).

11. A gear-changing device according to any one of Claims 1 to 10, wherein the pantograph mechanism is provided with an energy storage means (20) arranged so that when in use of the device a predetermined resistance against axial movement of the chain cage (14) is encountered, operation of the control wire (W) to transform the pantograph mechanism results in displacement of the movable member (9) and chain cage (14) generally radially of the sprocket assembly (S) only and energy is stored in said energy storage means (20), and when said resistance is subsequently reduced below said predetermined resistance, said energy storage means (20) displaces the movable member (9) and chain cage (14) substantially axially of said sprocket assembly (S to effect a gear change.

12. A gear-changing device according to Claim 11, wherein the energy storage means comprises a resilient biasing means (20) disposed to act between the movable member (9) and chain cage (14).

13. A gear-changing device according to any one of the preceding claims wherein the pantograph mechanism (2, 5, 6, 9) is restricted in its swinging movement generally radially of the sprocket assembly (S) to within a predetermined angle by co-operating stop means (18a, 1a) acting between the pantograph mechanism (2, 5, 6, 9) and the bracket (1).

14. A gear-changing device according to Claim 13 wherein the co-operating stop means comprises a brace (18) mounted on one of the link members (5) and having a hooked end (18a) slidably movable in a slot (1a in the bracket (1) which slot (1a) has a predetermined length.

**Revendications**

1. Dispositif de changement de vitesses pour bicyclette, lequel dispositif comprend un dérailleur arrière commandable pendant l'utilisation du dispositif par un câble de commande (W), ce dérailleur comprenant une console (1) destinée à assurer le couplage avec une extrêmité fourchue (E) de la bicyclette et un mécanisme à pantographe relié de façon pivotante à la console (1) par une première broche horizontale (3), ce mécanisme à pantographe comprenant une pièce support (2) reliée de façon pivotante à la console (1) par la première broche horizontale (3), deux organes de transmission de mouvements (5, 6) reliés de façon pivotante à la pièce support (2) par des axes (7, 8) perpendiculaires à la première broche horizontale (3), et une pièce mobile (9) reliée de façon pivotante aux deux organes de transmission (5, 6) au moyen d'axes correspondants (10, 11) également sensiblement perpendiculaires à la première broche horizontale (3), la pièce mobile (9) étant reliée de façon pivotante par une deuxième broche horizontale (15), sensiblement parallèle à la première broche horizontale, à une cage de chaîne (14); et une pièce de retenue (16) du câble de commande, prévue sur l'un des deux organes de transmission de mouvements (5, 6) ou la pièce mobile (9) du mécanisme à pantographe pour fixer une extrêmité du câble de commande (W), au moins un guidage (17) du câble de commande étant prévu pour guider le câble de commande (W), ce guidage (17) de câble de commande étant disposé, pendant le fonctionnement du dispositif, dans une position espacée de l'axe de l'ensemble de pignons (S) et vers l'extérieur au-delà d'une ligne droite imaginaire (X—X) reliant la partie de la pièce de retenue de câble (16) en contact avec le câble de commande, et la première broche horizontale (3), le guidage (17) du câble de commande étant formé et arrangé de telle manière que les forces appliquées au mécanisme à pantographe, par l'intermédiaire du guidage (17), par le câble de commande (W) soient telles qu'elles exercent un couple sur le mécanisme à pantographe qui tend à faire pivoter ledit mécanisme à pantographe autour de la broche horizontale (3) afin que lorsque, pendant le fonctionnement du dispositif, le câble de commande (W) est actionné en l'absence d'une résistance prédéterminée contre un mouvement axial de la cage du chaîne (14), pour modifier la forme du mécanisme à pantographe avec un déplacement de la cage de chaîne (14) axialement par rapport à l'ensemble de pignons (S), le mécanisme à pantographe pivote autour de la première broche horizontale (3) pour déplacer la cage de chaîne (14) sensiblement radialement par rapport à l'ensemble de pignons (S).

2. Dispositif de changement de vitesses suivant la revendication 1, caractérisé en ce que le guidage du câble de commande (17, 17a, 170) est prévu sur le dérailleur.

3. Dispositif de changement de vitesses suivant la revendication 2, caractérisé en ce qu'un guidage (17) du câble de commande est prévu sur la pièce support (2).

4. Dispositif de changement de vitesses suivant la revendication 2 ou 3, caractérisé en ce qu'un guidage (17a, 170) du câble de commande est prévu sur la console (1).

5. Dispositif de changement de vitesses suivant l'une quelconque des revendications 2 à 4, caractérisé en ce qu'un premier et un deuxième guidages (17, 17a) du câble de commande sont prévus, le premier guidage (17) du câble de commande étant disposé vers l'extérieur au-delà de la ligne droite imaginaire (X—X) reliant la partie de contact de la pièce de retenue (16) du câble de commande et la première broche horizontale (3), le deuxième guidage (17a) du câble de commande étant disposé, au voisinage de la partie de fixation de la console (1) prévue pour la fixation de cette dernière à l'extrêmité fourchue (E) de la bicyclette.

6. Dispositif de changement de vitesses suivant la revendication 5, caractérisé en ce que le premier guidage (17) du câble de commande est prévu sur la pièce support (2) et le deuxième guidage (17a) du câble de commande est prévu sur la console (1).

7. Dispositif de changement de vitesses suivant la revendication 2, caractérisé en ce que le guidage du câble de commande comporte un prolongement qui s'étend à proximité de la partie de fixation de la console (1).

8. Dispositif de changement de vitesses suivant la revendication 1, caractérisé en ce que le guidage (17, 17a, 170 et 270) du câble de guidage est prévu sur l'extrêmité fourchue (E) de la bicyclette, cette extrêmité fourchue (E) étant celle à laquelle la console (1) est fixée.

9. Dispositif de changement de vitesses suivant la revendication 1, caractérisé en ce que le guidage (370) de câble de commande est monté sur l'arbre de moyeu (HS) sur lequel l'ensemble de pignons (S) est monté.

10. Dispositif de changement de vitesses suivant la revendication 9, caractérisé en ce que le guidage (370) du câble de commande comprend une partie de montage (30) comportant un alésage traversant (31) et pouvant être montée sur l'arbre de moyeu (HS) et une partie de guidage (32).

11. Dispositif de changement de vitesses suivant l'une quelconque des revendications 1 à 10, caractérisé en ce que le mécanisme à pantographe comporte des moyens (20) de stockage d'énergie conçus pour que, lorsque pendant le fonctionnement du dispositif une résistance prédéterminée contre le mouvement axial de la cage de chaîne (14) est rencontrée, la manoeuvre du câble de commande (W) pour transformer le mécanisme à pantographe provoque un déplacement de la pièce mobile (9) et de la cage de chaîne (14) sensiblement radialement par rapport à l'ensemble de pignons (S) seulement et l'énergie est stockée dans les moyens (20) de stockage d'énergie, et lorsque cette résistance est ensuite réduite au-dessous de ladite résistance prédéterminée, les moyens (20) de stockage d'énergie déplacent la pièce mobile (9) et la cage de chaîne (14) sensiblement axialement par rapport à l'ensemble des pignons (S) pour effectuer un changement de vitesse.

12. Dispositif de changement de vitesses suivant la revendication 11, caractérisé en ce que les moyens de stockage d'énergie comprennent des moyens de rappel (20) élastiques disposés pour agir entre la pièce mobile (9) et la cage de chaîne (14).

13. Dispositif de changement de vitesses suivant l'une quelconque des revendications précédentes, caractérisé en ce que le mécanisme à pantographe (2, 5, 6, 9) est limité dans son mouvement de pivotement sensiblement radialement par rapport à l'ensemble de pignons (S), à l'intérieur d'un angle prédéterminé par des moyens d'arrêt (18a, 1a) qui coopèrent en agissant entre le mécanisme à pantographe (2, 5, 6, 9) et la console (1).

14. Dispositif de changement de vitesses suivant la revendication 13, caractérisé en ce que les moyens d'arrêt qui coopèrent comprennent une entretoise (18) montée sur l'un des organes de transmission de mouvements (5) et comportant une extrêmité en forme de crochet (18a) mobile de façon coulissante dans une fente (1a) formée dans la console (1), cette fente (1a) ayant une longueur prédéterminée.

## Patentansprüche

1. Fahrradgangschaltvorrichtung, umfassend eine beim Gebrauch der Vorrichtung mit einem Schaltkabel (W) betätigbare hintere Kettenschaltung, die aus einem Bügel (1) zum Verbinden mit einem Gabelende (E) des Fahrrads und einem mit diesem Bügel (1) mittels einer ersten horizontalen Spindel (3) gelenkig verbundenen Scherenmechanismus besteht, der ein mit diesem Bügel (1) mittels dieser ersten horizontalen Spindel (3) gelenkig verbundenes Stützglied (2), zwei mit diesem mittels zu jener ersten horizontalen Spindel (3) senkrecht stehenden Spindeln (7, 8) gelenkig verbundene Kupplungsglieder (5, 6) und ein mit diesen über ebenfalls zu jener ersten horizontalen Spindel (3) weitgehend senkrecht stehende, entsprechende Spindeln (10, 11) gelenkig verbundenes bewegliches Glied (9) umfasst, welches mittels einer jener ersten horizontalen Spindel im wesentlichen parallelen zweiten horizontalen Spindel (15) mit einem Kettengehäuse (14) gelenkig verbunden ist, und eine auf einem der besagten beiden Kupplungsglieder (5, 6) oder dem beweglichen Glied (9) jenes Scherenmechanismus vorgesehene Schaltkabelhalterung (16) zur Befestigung eines Endes dieses Schaltkabels (W) wobei mindestens eine Schaltkabelführung (17), um dieses zu führen, vorgesehen ist, die beim Gebrauch der Vorrichtung in einer Stellung auf Abstand von der Achse der Kettenradbaugruppe (S) und ausserhalb jenseits einer den das Schaltkabel greifenden Teil jener Kabelhalterung (16) und die erste horizontale Spindel (3) verbindenden imaginären Geraden (X—X) liegt und so ausgebildet und angeordnet ist, dass die von dem Schaltkabel (W) her über die Führung (17) an dem Scherenmechanismus anliegenden Kräfte dabei auf diesen ein Drehmoment ausüben, das zu dessen Schwenkung um die horizontale Spindel (3) führt, wodurch im Gebrauch der Vorrichtung bei Betätigung dieses Schaltkabels (W) in Abwesenheit eines vorgegebenen Widerstands gegen axiale Bewegung des Kettengehäuses (14) zwecks Formänderung des besagten Scherenmechanismus unter Axialverschiebung des Kettengehäuses (14) bezüglich jener Kettenradbaugruppe (S) dieser Scherenmechanismus um jene erste horizontale Spindel (3) geschwenkt wird, um dieses Kettengehäuse (14) allgemein radial zu jener Kettenradbaugruppe (S) zu verschieben.

2. Gangschaltvorrichtung nach Anspruch 1, worin besagte Schaltkabelführung (17, 17a, 170) auf dieser Kettenschaltung angeordnet ist.

3. Gangschaltvorrichtung nach Anspruch 2, worin eine solche Schaltkabelführung (17) auf besagtem Stützglied (2) angeordnet ist.

4. Gangschaltvorrichtung nach Anspruch 2 oder 3, worin eine solche Schaltkabelführung (17a, 170) auf dem Bügel (1) angeordnet ist.

5. Gangschaltvorrichtung nach einem der Ansprüche 2 bis 4, worin ein Paar erster und zweiter Schaltkabelführungen (17, 17a) vorgesehen ist, wobei die erste Schaltkabelführung (17) ausserhalb jenseits der den Griffteil jener Schaltkabelhalterung (16) und die erste horizontale Spindel (3) verbindenden imaginären Geraden (X—X) und die zweite Schaltkabelführung (17a) in der Nähe des zur Befestigung jenes Bügels (1) am Gabelende (E) des Fahrrads vorgesehenen Befestigungsteils des Bügels angeordnet ist.

6. Gangschaltvorrichtung nach Anspruch 5, worin besagte erste Schaltkabelführung (17) auf jenem Stützglied (2) und besagte zweite Schaltkabelführung (17a) auf jenem Bügel (1) angeordnet ist.

7. Gangschaltvorrichtung nach Anspruch 2, worin besagte Schaltkabelführung einen Ansatz aufweist, der sich bis in die Nähe des Befestigungsteils jenes Bügels (1) erstreckt.

8. Gangschaltvorrichtung nach Anspruch 1, worin besagte Schaltkabelführung (17, 17a, 170 und 270) auf dem Gabelende (E) des Fahrrads angeordnet ist, wo jener Bügel (1) befestigt ist.

9. Gangschaltvorrichtung nach Anspruch 1, worin besagte Schaltkabelführung (370) auf der Nabenwelle (HS) gelagert ist, wo sich die Kettenradbaugruppe (S) befindet.

10. Gangschaltvorrichtung nach Anspruch 9, worein besagte Schaltkabelführung (370) aus einem auf dieser Nabenwelle (HS) anbringbaren Lagerungsteil (30) mit einer Durchgangsbohrung (31) und einem Führungsteil (32) besteht.

11. Gangschaltvorrichtung nach einem der Ansprüche 1 bis 10, worin der Scherenmechanismus mit einer Energiespeicherungseinrichtung (20) versehen ist, die so angeordnet ist dass, wenn beim Gebrauch der Vorrichtung einer Axialbewegung des Kettengehäuses (14) ein vorgegebener Widerstand entgegengesetzt wird, Betätigung des Schaltkabels (W) zwecks Formänderung des Scherenmechanismus nur zu einer Verschiebung des beweglichen Glieds (9) und Kettengehäuses (14) allgemein radial zur Kettenradbaugruppe (S) führt und in jener Energiespeicherungseinrichtung (20) Energie gespeichert wird und bei späterer Verringerung dieses Widerstands unter den vorbestimmten Wert diese Energiespeicherungseinrichtung (20) das bewegliche Glied (9) und Kettengehäuse (14) im wesentlichen axial zu jener Kettenradbaugruppe (S) verschiebt, um eine Gangschaltung zu bewirken.

12. Gangschaltvorrichtung nach Anspruch 11, worin die Energiespeicherungseinrichtung aus federnden Vorspannmitteln (20) besteht, die dazu eingerichtet sind, zwischen dem beweglichen Glied (9) und dem Kettengehäuse (14) zu wirken.

13. Gangschaltvorrichtung nach einem der vorhergehenden Ansprüche, worin die allgemein zur Kettenradbaugruppe (S) radiale Schwenkbewegung des Scherenmechanismus (2, 5, 6, 9) durch zusammenarbeitende Anschlagmittel (18a, 1a), die zwischen dem Scherenmechanismus (2, 5, 6, 9) und dem Bügel (1) zur Wirkung kommen, auf einen vorbestimmten Winkelbereich beschränkt ist.

14. Gangschaltvorrichtung nach Anspruch 13, worin die zusammenarbeitenden Anschlagmittel aus einer auf einem der Kupplungsglieder (5) angebrachten Strebe (18) mit einem hakenförmigen, in einem Schlitz (1a) vorbestimmter Länge im Bügel (1) gleitend beweglichen Ende (18a) bestehen.

Fig. 1

Fig. 2

**Fig.4**

**Fig.3**

**Fig.5**

**Fig.6**

Fig.7

170

17a

E

e

Fig.8

170

I

e

Fig.9

E

270

e

W

4

Fig.11

Fig.10

Fig.12

Fig.13